# EUROPEAN PATENT SPECIFICATION

(11) **EP 2 222 907 B1**
(45) Date of publication and mention of the grant of the patent: **02.09.2015**
(21) Application number: 08864193.1
(22) Date of filing: 18.12.2008
(51) Int. Cl.: C09J 161/14, C08L 61/14, C08L 61/20, C08L 61/28, D04H 1/64, C08L 61/24, C08L 61/34

(54) **RESIN FOR PRODUCING AN INORGANIC FIBER MATERIAL**
HARZ ZUR HERSTELLUNG EINES ANORGANISCHEN FASERMATERIALS
RÉSINE PERMETTANT LA PRODUCTION D'UN MATÉRIAU À BASE DE FIBRES INORGANIQUES

(30) Priority: 19.12.2007 US 14944
(43) Date of publication of application: 01.09.2010
(73) Proprietor: Dynea Chemicals OY, 00580 Helsinki (FI)
(72) Inventor: VAN HERWIJNEN, Hendrikus W.G., A-3464 Hausleiten-goldgeben (AT); HEEP, Wolfgang, 15569 Woltersdorf (DE)
(74) Representative: Nemec, Harald
(86) International application number: PCT/IB2008/003551
(87) International publication number: WO 2009/081264

(56) References cited:
- WO-A-01/59026
- US-A- 3 919 134
- US-A- 5 371 140

## Description

This application claims priority to Provisional Application No. 61/014,944 which was filed in the United States on December 19, 2007.

### Field of the invention

A water dilutable binder resin useful for binding inorganic fibers, processes for preparing the resin, methods of using the resin as binders for inorganic fiber materials, such as mineral wool products, and inorganic fiber materials comprising the resin binder.

### Background of the invention

There is pressure to improve traditional phenol-formaldehyde (PF) resins used as binders for inorganic fiber materials such as mineral wool because of stricter environmental regulations concerning the emissions during the production of the inorganic fiber materials. Furthermore, the raw materials to produce a PF resin are derived from fossil resources, and it is desirable to introduce components derived from renewable resources for sustainability and economic reasons.

Proteins have been suggested as such a renewable resource. The present inventors have found that certain protein isolates are, however, not suitable for mineral wool resins because of their high viscosity and/or lack of water dilutability. It is noted that US 2007/0036975 describes a thermosetting binder comprising a vegetable protein isolate which can be used to produce mineral wool products. The reference teaches the use of an "aqueous soy-based binder" with "low viscosity." However, the reference is completely silent as to how to make the aqueous soy based binder having low viscosity. It is known that soy proteins are water insoluble and have a very high viscosity. Furthermore, this binder does not contain a formaldehyde based resin, and amines are used as crosslinkers, which are problematic in that these amine compounds are emitted during curing of the resin.

Accordingly, there is a need in the mineral wool product art for an inexpensive PF resin having low formaldehyde emissions, good chemical properties and which is made from renewable resources.

The present inventors have researched conventional PF resins for adhesives/binders of timber products in order to ascertain if these resins could be used as binders for mineral wool products. However, it was found by the present inventors that conventional PF resins for timber products greatly differ from the PF resins that can be used as binders for mineral wool (glass wool, slag wool, stone wool). Composite board resins have a high viscosity so that the glue does not diffuse too much into the wood cells. These high viscosity resins would not give proper binding if applied to mineral wool products, since the glue cannot be diluted with water and would not flow to crosspoints (i.e., points where the individual fibers cross one another). The high viscosity resins are condensed to give molecules which are built up of several phenolic cores bonded by bridges originating from formaldehyde. Moreover, the high viscosity resins are applied at a high concentration because the evaporation of residual water of the glued board costs a great amount of energy.

Typical examples of references teaching PF resins as adhesives/binders for timber products include: US 2005/0222358 and EP 1318000 (2006). US 2005/0222358 describes protein based adhesives comprising a formaldehyde resin and a methylolated denaturated protein for bonding wood substrates. EP 1318000 (2006) describes adhesives for the production of swelling-compensated wood materials consisting of a phenol-formaldehyde resin and a natural compound containing a low molecular protein. However, even the use of low molecular proteins (as in EP 1318000) gives a binder that is suitable for timber products, but not for mineral wool.

For reasons mentioned above, the present inventors have found that the particular compositions and processes used in these references for adhesives/binders for timber products could not be applied to mineral wool products.

For reasons mentioned above, the present inventors have found that the conventional compositions and processes for adhesives/binders for timber products could not be applied to mineral wool products. Given that there remains a great need for an inexpensive resin having low formaldehyde emissions made from renewable resources for use in inorganic fiber materials, such as mineral wool products, the present inventors have made diligent efforts. The present invention is the fruit of their efforts, which fulfils this great need and amounts to a real innovation over the prior art.

### Description of the invention

### Water Dilutable Binder Resin and Curable Aqueous Composition:

The present invention is drawn, in part, to a water dilutable binder resin for use in an inorganic fiber material; wherein the binder resin is prepared by reacting at least the following components in any order: (a) proteinaceous material which is substantially soluble in water at 20°C and has a viscosity of < 50 mPa*s for a 25wt% aqueous solution, (b) an aromatic hydroxyl compound, and (c) an aldehyde; and wherein said water dilutable binder resin has a property of having a viscosity of <100 mPa*s when measured at a concentration of 50wt% at 20°C.

Preferably, the viscosity of said (a) proteinaceous material is <10 mPa*s and more preferably <5 mPa*s. Preferably, the viscosity of said water dilutable binder resin is <50 mPa*s and more preferably <10 mPa*s when measured at a concentration of 50wt% at 20°C.

Herein the viscosity measurements are made with an Anton Paar CP50-1 viscometer, cone and plate measuring system, at a temperature of 20°C and a shear rate of 200 s⁻¹ (ISO 3219) unless otherwise indicated. Also, herein the terms "substantially water soluble" and "substantially soluble in water" mean that at least 94% of the proteinaceous material can completely dissolve in water at 20°C. In addition, the term "binder" as it is used with the term "resin" is meant to indicate that the resin creates substantially uniform cohesion throughout the inorganic fiber materials.

In an embodiment, the weight ratio of component (a) to the resin formed out of (b) + (c) based on solid content is 1% to 50%. Preferably, the weight ratio is 5% to 35%. Most preferably, the weight ratio is about 10%.

In an embodiment, the molar ratio of (c) to (b) of the resin is 2.5 - 5.5, most preferably 3 - 4.

The component (a) can be an essentially pure composition of monomer amino acids. However, in view of the relative cost of the monomer amino acid, it is preferred that the proteinacious material is a protein hydrolyzate. The source of the proteinaceous material component (a) is not particularly limited, so long as it is substantially water soluble, however, preferably, the proteinaceous material component (a) is an amino acid and/or protein hydrolyzate, which is derived from animal and/or plant sources. Most preferably, the proteinaceous material component (a) is an amino acid and/or protein hydrolyzate, which is derived from animal sources. The proteinaceous material component (a) is preferably free of high molecular, water insoluble proteins such as collagen. In an embodiment, at least 50wt% of component (a) has a weight average molecular weight (Mw) < 25 kDa based on the weight of component (a). Preferably, at least 50wt% of component (a) has a Mw < 10 kDa. It was found that the binder resin prepared with 100wt% of component (a) having a Mw < 10 kDa has beneficial properties. The component (a) can have an acidic or basic pH. In an embodiment, the component (a) has a maximum concentration in water of greater than 30%. More preferably, the maximum concentration in water of component (a) is less than 80%. Most preferably, the maximum concentration in water of component (a) is 40-75%.

The component (b) aromatic hydroxyl compound (sometimes referred to herein using the identifier "P") comprise phenol and various modified phenols including amino phenol, the ortho, meta and para cresols, cresylic acid, xylenol, resorcinol, catechol, hydrochinon, bisphenol A, quinol (hydroquinone), pyrogallol (pyrogallic acid), phloroglucinol, or combinations thereof, and the like. Preferably, the aromatic hydroxyl compound is resorcinol, hydrochinon, phenol or bisphenol A. More preferably, the aromatic hydroxyl compound is phenol. These compounds or combinations thereof can be reacted with component (c) various aldehydes (sometimes referred to herein using the identifier "F"), as a class, preferably those having from 1 to about 10 carbon atoms in aliphatic or cycloaliphatic or aromatic or mixed form, to produce the resins useful in the invention. Such aldehydes include, for example, formaldehyde, glyoxal, glutaraldehyde, acetaldehyde, propionaldehyde, crotonaldehyde, benzaldehyde, furfuraldehyde, and the like. Formaldehyde is presently preferred.

The water dilutable binder resin of the present invention can further comprise amino resins which are curable aldehyde resins which include, for example, urea-aldehyde resins (urea is sometimes referred to herein using the identifier "U"), aniline-aldehyde resins, melamine-aldehyde resins, mixtures of two of these resins, melamine-urea-aldehyde resins, and the like. The aldehydes for use in the preparation of the amino resins include those listed as component (c) in the previous paragraph. The nitrogen compounds (e.g., amines, amides and triazines) which can be used to prepare the amino resins comprise ammonia, urea, ethyleneurea, thiourea, guanidine, methylurea, acetylurea, cyanamide, dicyanodiamide, biuret, semi-carbazide, melamine, monophenylmelamine, ammeline, thioammeline, ammelide, formoguanamine, acetoguanamine, stearoguanamine, and the like. Preferably, the amino resin is a urea formaldehyde resin, melamine formaldehyde resin or a melamine-ureaformaldehyde resin which latter can be produced by mixing two out of the group of urea formaldehyde resin, melamine formaldehyde resin and melamine-urea-formaldehyde resin or by reacting urea and melamine with formaldehyde.

In an embodiment, the water dilutable binder resin composition comprises component (a) proteinaceous material which is chemically (i.e., ionically, by Van der waals force and/or covalently, preferably covalently) bound directly or indirectly to the backbone of an aromatic hydroxyl compound-aldehyde resin and/or the backbone of the amino resin. In addition, the component (a) proteinaceous material can act as a crosslinker between the aromatic hydroxyl compound-aldehyde resin and/or the amino resin. It is preferred that no other crosslinker is added to the water dilutable binder resin composition (especially compounds that could be emitted during curing of the final product resin).

During storage before application, the water dilutable binder resin composition preferably has the following characteristics. The water dilutable binder resin composition has a solid content of greater than 30%. More preferably, the water dilutable binder resin composition has a solid content of greater than 35%. Most preferably, the water dilutable binder resin composition has a solid content of 35-65%. Generally, the water dilutable binder resin composition has a basic pH. More preferably, the water dilutable binder resin composition has pH of 7-11. The water dilutable binder resin composition has a dilutability of 1 part resin to >5 parts water. More preferably, the water dilutable binder resin composition has a dilutability of 1 part resin to >10 parts water. Most preferably, the water dilutable binder resin composition has infinite dilutability (i.e., showing stability at 1 part resin to 20 parts water for 2 minutes). Generally, the water dilutable binder resin composition has a B time of 2-10 minutes. More preferably, the water dilutable binder resin composition has a B time of 3-8 minutes. The water dilutable binder resin composition has free formaldehyde in a concentration of <5%. More preferably, the water dilutable binder resin composition has free formaldehyde in a concentration of <3%. The water dilutable binder resin composition has free phenol in a concentration of <5%. More preferably, the water dilutable binder resin composition has free phenol in a concentration of <3%.

The water dilutable binder resin composition preferably has a dry strength ≥ 4.5 N/mm², more preferably > 6.5 N/mm², and most preferably > 8.0 N/mm² as measured by the Sticks Method. Furthermore, the water dilutable binder resin composition preferably has a wet strength ≥ 2.0 N/mm², more preferably > 3.0 N/mm², and most preferably > 4.0 N/mm² as measured by the Sticks Method.

In an embodiment of the invention, the water dilutable binder resin composition includes other components, e.g. emulsifiers, plasticizers, anti-foaming agents, biocide additives, anti-mycotics including, e.g., fungicides and mold inhibitors, adhesion promoting agents, colorants, waxes, antioxidants, corrosion inhibitors, odor inhibitors and combinations thereof

The water dilutable binder resin composition is prepared in an aqueous solvent. In an embodiment of the invention, the water dilutable binder resin composition includes solvents other than water to promote intimate mixing of the components.

The present invention is drawn, in part, to a curable aqueous composition for preparing the water dilutable binder resin (described above) having a viscosity of <100 mPa*s when measured at a concentration of 50wt% at 20°C useful for binding inorganic fibers, wherein said curable aqueous composition comprises: said proteinaceous material (a) which is substantially soluble in water at 20°C and has a viscosity of < 50 mPa*s for a 25wt% aqueous solution, said aromatic hydroxyl compound (b), and said aldehyde (c). The curable aqueous composition optionally comprises said amino resins and said other components described two paragraphs above.

### Process of Preparing the Water Dilutable Binder Resin:

The present invention, in part, is drawn to a process for forming a water dilutable binder resin for use in an inorganic fiber material comprising reacting an aqueous composition of at least the following components in any order: (a) proteinaceous material which is substantially soluble in water at 20°C and has a viscosity of < 50 mPa*s for a 25wt% aqueous solution, (b) an aromatic hydroxyl compound, and (c) an aldehyde. The product (water dilutable binder resin) has a property of having a viscosity of < 100 mPa*s when measured at a concentration of 50wt% at 20°C. Preferably, the viscosity of said (a) proteinaceous material is <25 mPa*s and more preferably <10 mPa*s for a 25wt% aqueous solution. When component (a) is of meat origin, the viscosity of component (a) can be <5 mPa*s for a 25wt% aqueous solution. Preferably, the viscosity of said water dilutable binder resin is <50 mPa*s and more preferably <10 mPa*s when measured at a concentration of 50wt% at 20°C.

In an embodiment of the present invention, the component (b) aromatic hydroxyl compound and (c) an aldehyde react together in a first step and then the component (a) proteinaceous material and optionally the nitrogen compound is/are reacted therein in a second step.

The reaction generally takes place in the presence of a catalytic amount of an organic or inorganic base. Preferably, the amount of base is 5 wt% or less based on wet resin. Most preferably < 3wt%. The mixture undergoing the reaction is typically heated to less then 100°C to speed the reaction. More preferably, the mixture is heated to 50-75°C.

The base is not specifically limited in amount (other than being present in a catalytic amount) or in type, although it is preferably selected from the group consisting of a nitrogenous base such as an ethanolamine (e.g., dimethylethanolamine or diethanolamine), sodium hydroxide, potassium hydroxide, calcium hydroxide, tin compounds (dibutyltin dilaurate, dibutyltin dioctoate and dibutyltin diacetate) and the like. The use of a nitrogenous base is especially preferred because it gives less ash content, does not dilute the product, and overall the final product has better mechanical properties.

In an embodiment of the invention, the proteinaceous material is added during resin production with an excess of formaldehyde to assure methylolation to give reactive sites which can bind into the resin matrix during curing. The resulting product is a stable, water-dilutable resin for glass fiber materials.

The component (a) can be an essentially pure composition of monomer amino acids. However, in view of the relative cost of the monomer amino acid, it is preferred that the proteinacious material is a protein hydrolyzate which is made in a process as described in WO2006/069803. The protein hydrolyzates are prepared from vegetable and/or animal materials. In an embodiment, the process comprises hydrolyzing (with or without pH adjustment or enzymes) an aqueous suspension of the material under a targeted pressure buildup in a reaction chamber, the temperature and reaction time being controlled in response to a characteristic curve for the system, and separating the suspension into a sediment and a supernatant.

Component (a) can be a proteinaceous material of meat origin produced by high-pressure thermolysis of animal meat meal in two steps, whereby in the first step a temperature of 140-190°C and a pressure of 10-50 bars is applied for a holding time of 5-60 minutes, and in the second step a temperature of 180-230°C and a pressure of 20-200 bars is applied during a holding time of 1-30 minutes, whereby the second holding step is shorter than the first one.

Component (a) can be a proteinaceous material of vegetable origin produced by high-pressure thermolysis of the ground vegetable at a temperature of 140-240°C and a pressure of 30-80 bars which is applied for a holding time of 5-60 minutes.

In the alternative, component (a) is a proteinaceous material produced by other hydrolysis methods including the application of enzymes under conditions sufficient to reduce the molecular weight range so that the material is substantially water soluble.

It is preferred that component (a) is of meat origin and not of vegetable origin. The production of the component (a) is made more difficult using vegetable materials an view of the carbohydrates, oils, etc. present in the vegetable materials. Also, it is more difficult to increase the concentration of the component (a) made from vegetable materials as well as to make resins having a high solid content.

The moisture content of component (a) can be varied and is dependent on the cost of drying and the cost of shipping with unremoved water. In an embodiment, no water has been removed from component (a) prior to reacting component (a) with components (b) and (c). When component (a) is of vegetable origin it is in an aqueous solution, so the moisture content is not usually a relevant indicator of its properties. However, when component (a) is of meat origin, component (a) can have a residual moisture of less than 20%. More preferably, when component (a) is of meat origin, the residual moisture of component (a) is less than 18%. Most preferably, when component (a) is of meat origin, the residual moisture of component (a) is less than 14%.

The component (a) proteinaceous material can be used in liquid or dried (such as spraydried) form.

### Inorganic Fiber Materials and Processes for Preparing the Same:

The present invention, in part, is drawn to an inorganic fiber material comprising: contacting inorganic fibers with the above-described water dilutable binder resin, and curing the resin composition. The inorganic fiber material comprises: inorganic fibers partially coated with a cured binder comprising an aromatic hydroxyl compound-aldehyde resin chemically bound directly or indirectly to a proteinaceous material, wherein said proteinaceous material has the property of being substantially soluble in water at 20°C and has a viscosity of < 50 mPa*s for a 25wt% aqueous solution when in isolated form. Herein, the phrase "when in isolated form" refers to the fact that the solubility property (i.e., being substantially soluble in water at 20°C) and the viscosity property (i.e., a viscosity of < 50 mPa*s for a 25wt% aqueous solution) are properties of the proteinaceous material prior to being bound to the aromatic hydroxyl compound-aldehyde resin.

Also, the present invention relates to inorganic fiber material products, such as mineral wool products, insulation products, glass fiber mat products, filter products and the like prepared with the present proteinaceous material modified binders.

Preferably, the inorganic fiber material product is a mineral wool product. The mineral wool product can be used, for instance, in thermal and fire insulation, fire protection, noise reduction and regulation, growth media and reinforcement of other materials such as plastics, and fillers.

Mineral wool products obtained according.to the invention comprise mineral fibers, i.e. man made vitreous fibers, for example glass, slag or stone wool. The fiber length and diameter of the mineral wool fibers are typical for the different types of mineral wool. Mineral wool products generally comprise mineral fibers bonded together by a cured thermoset polymeric material. One or more streams of molten glass, slag or stone are drawn into fibers and blown into a forming chamber where they are deposited as a web on to a travelling conveyer. The fibers, while airborne in the forming chamber and while still hot are sprayed with a binder. The partially coated fibrous web is then transported from the chamber to a curing oven where heated air is blown through the mat to cure the binder and rigidly bond the mineral wool fibers together.

More particularly, the water dilutable binder resin is applied to an inorganic fiber material (preferably nonwoven material) or substrate and is heated which results in drying and curing of the resin composition. The duration and temperature of heating affect the rate of curing and depend on the properties of the treated substrate. Heat treatment (curing) of the aqueous (waterborne) thermosetting resin binder composition can take place at temperatures from Room Temperature (about 23°C) up to about 250°C, for a time period of from a few minutes (e.g., 5-10 minutes) up to an hour, or a few hours, or more (e.g., 1-12 hours), depending on the specific materials and temperatures utilized. For the production of mineral wool products, heat treatment at about 150°C-250°C for a time period of 2 to 10 minutes is considered preferable and recommended.

During curing, the resin thus produced gives lower phenol emissions, because of dilution. The formaldehyde and ammonia emissions are dramatically lower when compared to an unmodified resin (a resin lacking the proteinaceous component (a)). During curing, it is preferred that the binder resin composition has a formaldehyde emission of < 40 mg/g dry resin, an ammonia emission of < 15 mg/g dry resin and/or a phenol emission of ≤ 18 mg/g dry resin. More preferably, the binder resin composition has a formaldehyde emission of < 30 mg/g dry resin and/or an ammonia emission of ≤ 12 mg/g dry resin.

Herein, all wt% values are based on the total weight of the composition unless otherwise indicated.

### Examples

### Animal Protein Hydrolyzate

The proteinacious material used in the following Examples 1-3 and 5 was an animal protein hydrolyzate prepared according to the method of WO 2006/069803.

**PH1** and **PH2** were produced by high-pressure thermolysis of animal meat meal in two steps, whereby in the first step a temperature of 140-190°C and a pressure of 10-50 bars is applied for a holding time of 5-60 minutes, and in the second step a temperature of 180-230°C and a pressure of 20-200 bars is applied during a holding time of 1-30 minutes, whereby the second holding step is shorter than the first one.

### Vegetable Protein Hydrolyzate

### PH3: Wheat protein hydrolyzate

450 mL of an aqueous slurry of DDGS (Dried Distillers Grains with Solubles) [Novel Ferm, distillery Dettmansdorf, Germany. Protein content 35%] with a pH of 4.0 and a concentration of 25% was heated in a batch autoclave at a temperature 180°C and a pressure of 50 bars for 30 minutes. Solid particles were removed by centrifugation (15 minutes at 3000g at 20°C) and subsequent filtration (pore size of filter 5 µm). Yield: 140 mL with a solid content of 10.2%

### PH4: Rapeseed protein hydrolizate

450 mL of an aqueous slurry of rapeseed press cake [BAG oil mill, Gussing, Austria. Protein content 35%] with a concentration of 25% was made. The pH of the slurry, was set to 7.0 with NaOH and subsequently heated in a batch autoclave for 30 minutes at a temperature of 180°C and a pressure of 50 bars. Solid particles were removed by centrifugation (15 minutes at 3000g at 20°C) and subsequent filtration (pore size of filter 5 µm). Yield: 150 mL with a solid content of 9.8%

### PH5: Soy protein hydrolizate

300 mL of an aqueous slurry of soy flour [Hensel Reformhaus, Germany. Protein content 50%] with a concentration of 20% was made. The pH of the slurry was set to 10.0 with NaOH and subsequently heated in a batch autoclave for 30 minutes at a temperature of 180°C and a pressure of 50 bars. Solid particles were removed by centrifugation (15 minutes at 3000g at 20°C) and subsequent filtration (pore size of filter 5 µm). Yield: 150 mL with a solid content of 10.8%

The properties of the animal protein hydrolyzates and the vegetable protein hydrolyzates are described in Table 1 below.

**Table 1. Protein Hydrolyzate**

| | | Protein Hydrolyzate **1 (PH1)** | Protein Hydrolyzate **2 (PH2)** | Protein Hydrolyzate **3 (PH3)** | Protein Hydrolyzate **4 (PH4)** | Protein Hydrolyzate **2 (PH5)** |
|---|---|---|---|---|---|---|
| Source | | Animal | Animal | Wheat | Rapeseed | Soy |
| | | Powder | Powder | Liquid | Liquid | Liquid |
| pH (1% solution in water) | DIN 38404 -C5 | 4.7 | 4.8 | 3,7 | 4.8 | 4.9 |
| Residual moisture [%] | DIN 38409 | <13 | <13 | | 9.8** | |
| Nitrogen content [%] | DIN EN ISO 44905-1 (H36) | 11.7 | 11.2 | 7.8** | | 11.0** |
| Viscosity (25% in water) [mPa*s] | ISO 3219 (20°C, 200s⁻¹) | 1 | 1 | 4*** | 7*** | 6*** |
| Viscosity (50% in water) [mPa*s] | ISO 3219 (20°C, 200s⁻¹) | 182 | 467 | Not possible | Not possible | Not possible |
| Max. concentration in water [%] | | 60 | 50 | <30 | <30 | <30 |
| Mw>10 kDa [%] | * | 17 | 34 | 1 | 0 | 1 |
| 10 kDa> Mw > 5 kDa | * | 14 | 13 | 2 | 1 | 2 |
| 5 kDa > Mw > 1 kDa [%] | * | 47 | 33 | 52 | 56 | 35 |
| Mw < 1 kDa [%] | * | 23 | 20 | 45 | 43 | 62 |

| | | | | | | |
|---|---|---|---|---|---|---|
| * Determination of Mw is made with a Pharmacia-system with a column of 30 cm length, 1.6 cm diameter, volume of column 60.3 mL. Stationary phase: Sephadex G-100 (fractionation range 1-150kDa). Mobile phase: PBS (Phosphate Buffered Saline). Detection at 280 nm, Calibration with substances of Biorad. ** Calculated on solids; original measurement done from aqueous solution *** Samples were concentrated to 25% by vacuum distillation | | | | | | |

The strength of some of the exemplified product resin compositions described below was measured using the "Sticks Method." The Sticks Method can measure the dry strength and/or the wet strength of the product resin compositions.

In the Sticks Method, specimen sticks were prepared with dimensions of 22x22x173 mm with rounded ends. 1800 gram of silica sand and 180 gram of resin (with solid content set to 40%) and 1.44 g of a 10% solution of γ-aminopropyltriethoxysilane were mixed for 10 minutes. Afterwards 135 g of the mixture were put into a mould of a sand rammer, such as Georg Fischer type PRA or equivalent, and compressed therewith (in 3 blows). The sand mixture was cured for 120 minutes at 180°C.

### Dry strength.

The sticks were stored for 24 hours at 20°C and 65% air humidity. Then the tensile strength was measured by 3 point bending test in the direction perpendicular to the compression direction. The testing device can be a Zwick Z010 TN2A or equivalent, using two stationary support bars having a diameter of 15mm spaced 155mm apart, and a central pressure bar having a diameter of 30 mm, moving at a crosshead speed of 2 mm per minute. The reported strength is the average value of breaking 6 sticks.

### Wet strength

After curing, the sticks were laid in boiling water for 4 hours. Afterwards, they were stored in an oven for 16 hours at 60°C. Then, they were put again in boiling water for 4 hours. Then, they were cooled by rinsing in a water bath with tap water for 1 pour. Then the tensile strength of the still wet sticks was measured by 3 point bending test (see above).

### INVENTIVE EXAMPLE 1

317 gram of aqueous phenol (92.7%), 416 ml water, and 26 grams dimethylethanolamine (DMEA) were combined and heated to 60°C. Then, 628 grams of formalin (55.2%) were slowly added during 1 hour, during which time the temperature rose to 65°C. The mixture was stirred at this temperature for an additional 4 hours and 20 minutes. Then, the mixture was cooled to 50°C and 164 grams of PH1 and 249 grams of urea were added. The mixture was stirred for 30 additional minutes at 35°C. The characteristics of the product resin composition are described in the following Table 2.

**Table 2. Resin characteristics**

| | | |
|---|---|---|
| Solid content | ISO 8618 | 49.6% |
| pH | DIN 16916-02-E | 8.1 |
| Water dilutability^{a} | ISO 8989 | Infinite |
| B-time (130°C) | DIN 16916-02-C1 | 6 min. 05 sec. |
| Free formaldehyde (after 24 hrs) | ISO 9397 | 0.9% |
| Free Phenol | ISO 8974 | 0.6% |
| Dry strength | "Sticks" Test | 9.2N/mm² |
| Wet strength | "Sticks" Test | 5.0N/mm² |

| | | |
|---|---|---|
| a - It is noted that ISO 8989 uses the term "miscibility" rather than "dilutability." We herein use these terms interchangeably and both terms are used to refer to the stability of the resin in water at specific water resin ratio for a predefined period of time. | | |

### COMPARATIVE EXAMPLE 1

The resin composition of Comparative Example I was made in essentially the same manner as Inventive Example 1, except that Comparative Example 1 is not made with PH1. Specifically, 387 gram of aqueous phenol (92.7%), 509 ml water, and 32 grams DMEA were combined and heated to 60°C. Then, 768 grams of formalin (55.2%) were slowly added during 1 hour, during which time the temperature rose to 65°C. The mixture was stirred at this temperature for an additional 4 hours and 20 minutes. Then, the mixture was cooled to 50°C and 304 grams of urea were added. The mixture was stirred for 30 additional minutes at 35°C. The characteristics of the product resin composition are described in the following Table 3.

**Table 3. Resin characteristics**

| | | |
|---|---|---|
| Solid content | ISO 8618 | 43.8% |
| pH | DIN 16916-02-E | 8.7 |
| Water dilutability | ISO 8989 | Infinite |
| B-time (130°C) | DIN 16916-02-C1 | 6 min. 47 sec. |
| Free formaldehyde (after 24 hrs) | ISO 9397 | |
| Free Phenol | ISO 8974 | 0.7 % |
| Dry strength | "Sticks" Test | |
| Wet strength | "Sticks" Test | 5.3 N/mm² |

### INVENTIVE EXAMPLE 2

400 grams of Comparative Example 1 (in its final form) were combined with 40 grams of **PH1.** The mixture was stirred until the protein hydrolyzate was completely dissolved. The characteristics of the product resin composition are described in the following Table 4.

**Table 4. Resin Characteristics**

| | | |
|---|---|---|
| Solid content | ISO 8618 | 49.8% |
| pH | DIN 16916-02-E | 8.2 |
| Water dilutability | ISO 8989 | Infinite |
| B-time (130°C) | DIN 16916-02-C1 | 4 min. 49 sec. |
| Free formaldehyde (after 24 hrs) | ISO 9397 | 0.8 % |
| Free Phenol | ISO 8974 | 0.7 % |
| Dry strength | "Sticks" Test | 9.4 N/mm² |
| Wet strength | "Sticks" Test | N/mm² |

### INVENTIVE EXAMPLE 3

400 grams of Comparative Example 1 (in its final form) were combined with 40 grams of **PH2.** The mixture was stirred until the protein hydrolyzate was completely dissolved. The characteristics of the product resin composition are described in the following Table 5.

**Table 5. Resin Characteristics**

| | | |
|---|---|---|
| Solid content | ISO 8618 | 49.1 % |
| pH | DIN 16916-02-E | 8.3 |
| Water dilutability | ISO 8989 | Infinite |
| B-time (130°C) | DIN 16916-02-C1 | 6 min. 08 sec. |
| Free formaldehyde (after 24 hrs) | ISO 9397 | 0.6% |
| Free Phenol | ISO 8974 | 0.7% |
| Dry strength | "Sticks" Test | 8.4 N/mm² |
| Wet strength | "Sticks" Test | 4.7 N/mm² |

### INVENTIVE EXAMPLE 4

200 grams of Comparative Example 1 (in its final form) were combined with 20 grams of glutamic acid (an amino acid). The mixture was stirred until the amino acid was completely dissolved. The pH of the solution was 5.0 and was raised by adding 24.9 gram of DMEA. The characteristics of the product resin composition are described in the following Table 6.

**Table 6. Resin Characteristics**

| | | |
|---|---|---|
| Solid content | ISO 8618 | 51.5% |
| pH | DIN 16916-02-E | 8.3 |
| Water dilutability | ISO 8989 | Infinite |
| B-time (130°C) | DIN 16916-02-C1 | 5 min. 18 sec. |
| Free formaldehyde (after 24 hrs) | ISO 9397 | 0.8 % |
| Free Phenol | ISO 8974 | 0.5 % |
| Dry strength | "Sticks" Test | 4.8 N/mm² |
| Wet strength | "Sticks" Test | Sticks disintegrated |

### INVENTIVE EXAMPLE 5

400 grams of Comparative Example 1 (in its final form) were combined with 80 grams of **PH1.** The mixture was stirred until the protein hydrolyzate was completely dissolved. The characteristics of the product resin composition are described in the following **Table 7.**

**Table 7. Resin Characteristics**

| | | |
|---|---|---|
| Solid content | ISO 8618 | 57.5% |
| pH | DIN 16916-02-E | 7.2 |
| Water dilutability | ISO 8989 | 1.8 |
| B-time (130°C) | DIN 16916-02-C1 | 3 min 35 sec. |
| Free formaldehyde (after 24 hrs) | ISO 9397 | 0.2 % |
| Free Phenol | ISO 8974 | 0.5 % |
| Dry strength | "Sticks" Test | 7.1 N/mm² |
| Wet strength | "Sticks" Test | 2.0 N/mm² |

### COMPARATIVE EXAMPLE 2

400 grams of Comparative Example 1 (in its final form) were combined with 40 grams of glucose. The mixture was stirred until the sugar was completely dissolved. The characteristics of the product resin composition are described in the following Table 8.

**Table 8. Resin Characteristics**

| | | |
|---|---|---|
| Solid content | ISO 8618 | 50.1 % |
| pH | DIN 16916-02-E | 8.7 |
| Water dilutability | ISO 8989 | Infinite |
| B-time (130°C) | DIN 16916-02-C1 | 8 min. 13 sec. |
| Free formaldehyde (after 24 hrs) | ISO 9397 | 0.3 % |
| Free Phenol | ISO 8974 | 0.6 % |
| Dry strength | "Sticks" Test | 8.5 N/mm² |
| Wet strength | "Sticks" Test | 6.3 N/mm² |

### COMPARATIVE EXAMPLE 3

Specifically, 179 gram of aqueous phenol (91%), 321ml water, and 14 grams DMEA were combined and heated to 60°C. Then, 346 grams of formalin (55,7%) were slowly added during 1 hour, during which time the temperature rose to 65°C. The mixture was stirred at this temperature for an additional 4 hours and 20 minutes. Then, the mixture was cooled to 50°C and 138 grams of urea were added. The mixture was stirred for 30 additional minutes at 35°C. The characteristics of the product resin composition are described in the following Table 9.

**Table 9. Resin characteristics**

| | | |
|---|---|---|
| Solid content | ISO 8618 | 46.1% |
| pH | DIN 16916-02-E | 8.9 |
| Water dilutability | ISO 8989 | Infinite |
| B-time (130°C) | DIN 16916-02-C1 | 7 min. 53 sec. |
| Free formaldehyde (after 24 hrs) | ISO 9397 | 0.8 % |
| Free Phenol | ISO 8974 | 0.6 % |

### INVENTIVE EXAMPLE 6

500 grams of Comparative Example 3 (in its final form) were combined with 565 grams **of PH3 (10.2%)**. The mixture was stirred until the protein hydrolyzate was completely dissolved. The characteristics of the product resin composition are described **in the following Table 10.**

**Table 10. Resin Characteristics**

| | | |
|---|---|---|
| Solid content | ISO 8618 | 29.7% |
| pH | DIN 16916-02-E | 4.9 |
| Water dilutability | ISO 8989 | Infinite |
| B-time (130°C) | DIN 16916-02-C1 | 5 min. 23 sec. |
| Free formaldehyde (after 24 hrs) | ISO 9397 | 0.8 % |
| Free Phenol | ISO 8974 | 0.3. % |

### INVENTIVE EXAMPLE 7

500 grams of Comparative Example 3 (in its final form) were combined with 46,7 grams **of PH4 (concentrated to a solid content of 25.7% by vacuum distillation).** The mixture was stirred until the protein hydrolyzate was completely dissolved. The characteristics of the product resin composition are described in the following Table 11.

**Table 11. Resin Characteristics**

| | | |
|---|---|---|
| Solid content | ISO 8618 | 44.5% |
| pH | DIN 16916-02-E | 8.4 |
| Water dilutability | ISO 8989 | Infinite |
| B-time (130°C) | DIN 16916-02-C1 | 5 min. 53 sec. |
| Free formaldehyde (after 24 hrs) | ISO 9397 | 0.6 % |
| Free Phenol | ISO 8974 | 0.7 % |

### INVENTIVE EXAMPLE 8

500 grams of Comparative Example 3 (in its final form) were combined with 533 grams of **PH5 (10.8 %).** The mixture was stirred until the protein hydrolyzate was completely dissolved. The characteristics of the product resin composition are described in the following Table 12.

**Table 12. Resin Characteristics**

| | | |
|---|---|---|
| Solid content | ISO 8618 | 29.3% |
| pH | DIN 16916-02-E | 7.0 |
| Water dilutability | ISO 8989 | Infinite |
| B-time (130°C) | DIN 16916-02-C1 | 5 min. 13 sec. |
| Free formaldehyde (after 24 hrs) | ISO 9397 | 0.7 % |
| Free Phenol | ISO 8974 | 0.3 % |

### Strength Measurements

As noted above, the strength values of the product resin compositions of Inventive Examples 1-5 and Comparative Examples 1-2 were measured based on the Sticks Method. It was found that the addition of the proteinaceous material (a) (the protein hydrolyzate), up to certain levels did not substantially change the strength of the product resin compositions as shown in the results of the Dry Strength and Wet Strength tests for Inventive Example 1 (made with the proteinaceous material (a)) as compared to Comparative Example 1 (made without the proteinaceous material (a)).

### Emissions

The resin was cured at 200°C, the emissions were captured in distilled water at room temperature and afterwards photometrical determined as follows: A glass filter is folded in a test tube. 0.2-0.3 g of resin is dropped onto the filter. The test tube with filter is put in an Erlenmeyer that is closed except for an inlet and an outlet air tube. The outlet tube emerges on one side into the test tube, so that the air flows over the test tube, on the other side it is connected to a heated hose. The Erlenmeyer is put into an oven of 200°C for a time to achieve an essentially complete curing, typically 25 minutes, the emissions are let out of the oven via the hose into three impinger flasks connected in series at about 2 liters per minute optionally supported by a suction pump. The first two flasks are each filled with 100 mL of distilled water at room temperature. The two water flasks in which the emission got captured are combined and the emission is photometrically determined in the water. The emissions were calculated back to dry substance of cured resin and are, therefore, independent of the solid content of the resin. Photometric determination was done using a LASA 100 photometer and Dr. Lange testkits (testkit LCK 325 for formaldehyde, testkit LCK 303 for ammonia, and testkit LCK 345 for phenol). The results are shown in the following Table 13.

**Table 13. Emissions during curing**

| Emission | Renewable Material | Formaldehyde (mg/gram dry resin) | Ammonia (mg/gram dry resin) | Phenol (mg/gram dry resin) |
|---|---|---|---|---|
| Inventive 1 | PH 1 | 23 | 6 | 16 |
| Inventive 2 | PH 1 | 23 | 5 | 17 |
| Inventive 3 | PH 2 | 28 | 4 | 18 |
| Inventive 4 | Glutamic acid* | 6 | 12 | 10 |
| Inventive 5 | PH 1 | 9 | 3 | 12 |
| Inventive 6 | PH 3 | 24 | 6 | 20 |
| Inventive 7 | PH 4 | 34 | 9 | 22 |
| Inventive 8 | PH 5 | 24 | 10 | 24 |
| Comparative 1 | None | 41 | 16 | 18 |
| Comparative 2 | Glucose | 56 | 9 | 23 |
| Comparative 3 | None | 41 | 12 | 25 |

| | | | | |
|---|---|---|---|---|
| *Glutamic Acid was obtained from Merck. | | | | |

As can be seen from Table 13, the formaldehyde and ammonia emissions are dramatically lower in Inventive Example 1 containing animal proteinaceous material (PH1) when compared to an unmodified resin containing no animal proteinaceous material as in Comparative Example 1.

It was found that the timing of adding the proteinaceous material was not critical to maintaining low emissions of the resin compositions so long as the proteinacious material is added to the resin composition. In Inventive Example 1, the proteinaceous material (PH1) was added prior to substantial resin formation, whereas in Inventive Example 2, the proteinaceous material (PH1) was added after substantial resin formation. Both Inventive Example 1 and Inventive Example 2 displayed improved emission concentrations. This is in distinction to the undesirably high emission concentrations seen in the resin composition of Comparative Example 1 which was formed without a proteinaceous material.

Inventive Examples 3 and 4 show that the molecular weight of the proteinaceous material can have an affect on the emissions of the resin composition. However, the use of the higher molecular weight of proteinaceous material (PH2) used in Inventive Example 3 and the use of the monomer amino acid in Inventive Example 4 give products having improved emissions concentrations.

The resin composition of Inventive Example 5 was made in essentially the same manner as Inventive Example 2, except that the amount of proteinaceous material (PH1) was increased in Inventive Example 5. The results of Table 13 show that the amounts of formaldehyde emissions, ammonia emissions and phenol emissions can be further reduced by increasing the concentration of proteinaceous material (PH1).

For Comparative Example 2, a certain amount of sugar was added to the composition of Comparative Example 1. The composition of Comparative Example 2 was made in a similar fashion to the process described in WO 96/26164. It was found that while the use of sugar will decrease the ammonia emissions, this composition has the disadvantage of increased formaldehyde and phenol emissions.

As can be seen from Table 13, the formaldehyde emissions are dramatically lower in the resin of Inventive Example 6 containing wheat proteinaceous material (PH3) and in the resin of Inventive Example 7 containing rapeseed proteinaceous material (PH4) and in the resin of Inventive Example 8 containing soy proteinaceous material (PH5) when compared to an unmodified resin containing no proteinaceous material as in Comparative Example 3. Also, the ammonia and phenol emissions are lower in the resin of Inventive Example 6 containing wheat proteinaceous material (PH3) and in the resin of Inventive Example 7 containing rapeseed proteinaceous material (PH4) and in the resin of Inventive Example 8 containing soy proteinaceous material (PH5) when compared to the unmodified resin containing no proteinaceous material as in Comparative Example 3.

The inventive resins for inorganic fiber materials have the advantage of being very easily sprayable and are applied at low concentrations in order to obtain a product where the resin is very well distributed and binds the inorganic fibers ideally together with small drops of resin at the joints of the inorganic fibers only. Thus, a phenolic resin for inorganic fiber materials contains low molecular methylolated phenol cores with only a very small degree of condensation. Furthermore, the resin is dilutable with water.

## Claims

1. A water dilutable binder resin useful for binding inorganic fibers, wherein said water dilutable binder resin is prepared in a process comprising:
reacting at least the following components in any order: (a) proteinaceous material which is substantially soluble in water at 20°C and has a viscosity of < 50 mPa*s for a 25wt% aqueous solution, (b) an aromatic hydroxyl compound, and (c) an aldehyde,
wherein said water dilutable binder resin has a property of having a viscosity of <100 mPa*s when measured at a concentration of 50wt% at 20°C.

2. The water dilutable binder resin according to claim 1, wherein said component (a) is a protein hydrolyzate.

3. The water dilutable binder resin according to any one of claims 1 and 2, wherein the weight ratio of component (a) to the resin formed out of (b) + (c) based on solid content is 1% to 50%.

4. The water dilutable binder resin according to any one of claims 1-3, wherein at least 50wt% of component (a) has a weight average molecular weight (Mw) < 25 kDa based on the weight of component (a).

5. The water dilutable binder resin according to any one of claims 1-4, wherein said component (b) is phenol and/or resorcinol and component (c) is formaldehyde.

6. The water dilutable binder resin according to any one of claims 1-5, wherein the reacting step results in the (a) proteinaceous material being chemically bound directly or indirectly to a backbone of an aromatic hydroxyl compound-aldehyde resin.

7. A process for forming a water dilutable binder resin which has a property of having a viscosity of <100 mPa*s when measured at a concentration of 50wt% at 20°C, wherein said process comprises:
reacting at least the following components in any order: (a) proteinaceous material which is substantially soluble in water at 25°C and has a viscosity of < 50 mPa*s for a 25wt% aqueous solution, (b) an aromatic hydroxyl compound, and (c) an aldehyde.

8. The process according to claim 7, wherein said component (a) is a protein hydrolyzate.

9. The process according to any one of claims 7 and 8, wherein the weight ratio of component (a) to the resin formed out of (b) + (c) based on solid content is 1% to 50%.

10. The process according to any one of claims 7-9, wherein at least 50wt% of component (a) has a weight average molecular weight (Mw) < 25 kDa based on the weight of component (a).

11. The process according to any one of claims 7-10, wherein said component (b) is phenol and/or resorcinol and component (c) is formaldehyde.

12. The process according to any one of claims 7-11, further comprising an amino resin which is at least one member selected from the group consisting of urea-aldehyde resin, aniline-aldehyde resin, melamine-aldehyde resin and melamine-urea-aldehyde cocondensation resin.

13. The process according to any one of claims 7-12, wherein the component (b) aromatic hydroxyl compound and (c) an aldehyde react together in a first step and then the component (a) proteinaceous material and optionally the nitrogen compound is/are reacted therein in a second step.

14. An inorganic fiber material comprising a water dilutable binder resin prepared in a process comprising:
contacting inorganic fibers with the water dilutable binder resin according to any one of claims 1-6, and
curing the water dilutable binder resin.

15. A curable aqueous composition for preparing a water dilutable binder resin having a viscosity of <100 mPa*s when measured at a concentration of 50wt% at 20°C useful for binding inorganic fibers, wherein said curable aqueous composition comprises:
(a) proteinaceous material which is substantially soluble in water at 20°C and has a viscosity of < 50 mPa*s for a 25wt% aqueous solution, (b) an aromatic hydroxyl compound, and (c) an aldehyde.

16. An inorganic fiber material comprising:
inorganic fibers at least partially coated with a cured binder comprising an aromatic hydroxyl compound-aldehyde resin chemically bound directly or indirectly to a proteinaceous material, wherein said proteinaceous material has the property of being substantially soluble in water at 20°C and has a viscosity of < 50 mPa*s for a 25wt% aqueous solution when in isolated form.

## Patentansprüche

1. Wasserverdünnbares Bindemittelharz, das zum Binden anorganischer Fasern nützlich ist, wobei das wasserverdünnbare Bindemittelharz durch ein Verfahren hergestellt wird umfassend:
das Reagieren von mindestens den folgenden Komponenten in irgendeiner Reihenfolge: (a) proteinischem Material, das in Wasser bei 20 °C im Wesentlichen löslich ist und eine Viskosität von <50 mPa*s in einer wässrigen Lösung von 25 Gew.-% aufweist, (b) einer aromatischen Hydroxylverbindung und (c) einem Aldehyd,
wobei das wasserverdünnbare Bindemittelharz die Eigenschaft aufweist, eine Viskosität von <100 mPa*s aufzuweisen, wenn sie in einer Konzentration von 50 Gew.-% bei 20 °C gemessen wird.

2. Wasserverdünnbares Bindemittelharz nach Anspruch 1, wobei die Komponente (a) ein Proteinhydrolysat ist.

3. Wasserverdünnbares Bindemittelharz nach einem der Ansprüche 1 und 2, wobei das Gewichtsverhältnis der Komponente (a) zu dem aus (b) + (c) gebildeten Harz auf der Basis des Feststoffgehalts 1 % bis 50 % beträgt.

4. Wasserverdünnbares Bindemittelharz nach einem der Ansprüche 1 - 3, wobei mindestens 50 Gew.-% der Komponente (a) ein gewichtsdurchschnittliches Molekulargewicht (Mw) von <25 kDa, auf das Gewicht der Komponente (a) bezogen, aufweisen.

5. Wasserverdünnbares Bindemittelharz nach einem der Ansprüche 1 - 4, wobei die Komponente (b) Phenol und/oder Resorcin ist und die Komponente (c) Formaldehyd ist.

6. Wasserverdünnbares Bindemittelharz nach einem der Ansprüche 1 - 5, wobei der Reagierschritt zu dem (a) proteinischen Material führt, das chemisch direkt oder indirekt an eine Rückgratkette eines aromatischen Hydroxylverbindungs-Aldehydharzes gebunden wird.

7. Verfahren zum Bilden eines wasserverdünnbaren Bindemittelharzes, das die Eigenschaft aufweist, eine Viskosität von <100 mPa*s aufzuweisen, wenn sie in einer Konzentration von 50 Gew.-% bei 20 °C gemessen wird, wobei das Verfahren Folgendes umfasst:
das Reagieren von mindestens den folgenden Komponenten in irgendeiner Reihenfolge: (a) proteinischem Material, das in Wasser bei 25 °C im Wesentlichen löslich ist und eine Viskosität von <50 mPa*s in einer wässrigen Lösung von 25 Gew.-% aufweist, (b) einer aromatischen Hydroxylverbindung und (c) einem Aldehyd.

8. Verfahren nach Anspruch 7, wobei die Komponente (a) ein Proteinhydrolysat ist.

9. Verfahren nach einem der Ansprüche 7 und 8, wobei das Gewichtsverhältnis der Komponente (a) zu dem aus (b) + (c) gebildeten Harz auf der Basis des Feststoffgehalts 1 % bis 50 % beträgt.

10. Verfahren nach einem der Ansprüche 7 - 9, wobei mindestens 50 Gew.-% der Komponente (a) ein gewichtsdurchschnittliches Molekulargewicht (Mw) von <25 kDa, auf das Gewicht der Komponente (a) bezogen, aufweisen.

11. Verfahren nach einem der Ansprüche 7 - 10, wobei die Komponente (b) Phenol und/oder Resorcin ist und die Komponente (c) Formaldehyd ist.

12. Verfahren nach einem der Ansprüche 7 - 11, des Weiteren ein Aminoharz umfassend, das mindestens eine Teilnehmersubstanz ist ausgewählt aus der Gruppe bestehend aus Harnstoff-Aldehydharz, Anilin-Aldehydharz, Melamin-Aldehydharz und Melamin-Harnstoff-Aldehyd-Cokondensationsharz.

13. Verfahren nach einem der Ansprüche 7 - 12, wobei die Komponente (b) aromatische Hydroxylverbindung und (c) ein Aldehyde in einem ersten Schritt zusammen reagieren und die Komponente (a) proteinisches Material und wahlweise die Stickstoffverbindung dann in einem zweiten Schritt darin reagiert wird/werden.

14. Anorganisches Fasermaterial umfassend ein wasserverdünnbares Bindemittelharz, das durch ein Verfahren hergestellt wird umfassend:
das Kontaktieren anorganischer Fasern mit dem wasserverdünnbaren Bindemittelharz nach einem der Ansprüche 1 - 6, und
das Aushärten des wasserverdünnbaren Bindemittelharzes.

15. Aushärtbare wässrige Zusammensetzung zur Herstellung eines wasserverdünnbaren Bindemittelharzes, das eine Viskosität von <100 mPa*s aufweist, wenn sie in einer Konzentration von 50 Gew.-% bei 20 °C gemessen wird, und zum Binden anorganischer Fasern nützlich ist, wobei die aushärtbare wässrige Zusammensetzung Folgendes umfasst:
(a) proteinisches Material, das im Wesentlichen in Wasser bei 20 °C löslich ist und eine Viskosität von <50 mPa*s in einer wässrigen Lösung von 25 Gew.-% aufweist, (b) eine aromatische Hydroxylverbindung und (c) ein Aldehyd.

16. Anorganisches Fasermaterial umfassend
anorganische Fasern, die mindestens teilweise mit einem ausgehärteten Bindemittel beschichtet sind, das ein aromatisches Hydroxylverbindungs-Aldehydharz umfasst, das chemische direkt oder indirekt an ein proteinisches Material gebunden ist, wobei das proteinische Material die Eigenschaft, in Wasser bei 20 °C im Wesentlichen löslich zu sein und eine Viskosität von <50 mPa*s in einer wässrigen Lösung von 25 Gew.-% aufweist, wenn sie in isolierter Form vorliegt.

## Revendications

1. Résine liante diluable dans l'eau utile pour des fibres inorganiques de liaison, dans laquelle la résine liante diluable dans l'eau est préparée dans un procédé consistant à :
faire réagir au moins les composants suivants dans n'importe quel ordre : (a) une substance protéique qui est sensiblement soluble dans l'eau à 20 °C et a une viscosité < 50 mPa*s pour une solution aqueuse à 25 % en poids, (b) un composé hydroxyle aromatique et (c) un aldéhyde,
dans laquelle ladite résine liante diluable dans l'eau a une propriété montrant une viscosité < 100 mPa*s lorsqu'elle est mesurée à une concentration de 50 % en poids à 20 °C.

2. Résine liante diluable dans l'eau selon la revendication 1, dans laquelle ledit composant (a) est un hydrolysat de protéine.

3. Résine liante diluable dans l'eau selon l'une quelconque des revendications 1 et 2, dans laquelle le rapport en poids du composant (a) à la résine constituée de (b) et (c) en fonction de la teneur en matières solides est de 1 % à 50 %.

4. Résine liante diluable dans l'eau selon l'une quelconque des revendications 1 à 3, dans laquelle au moins 50 % en poids du composant (a) ont un poids moléculaire moyen en poids (Mp) < 25 kDa par rapport au poids du composant (a).

5. Résine liante diluable dans l'eau selon l'une quelconque des revendications 1 à 4, dans laquelle ledit composant (b) est le phénol et/ou le résorcinol et le composant (c) est le formaldéhyde.

6. Résine liante diluable dans l'eau selon l'une quelconque des revendications 1 à 5, dans laquelle l'étape de réaction consiste à ce que la substance protéique (a) soit liée chimiquement de manière directe ou indirecte au squelette d'une résine de composé hydroxyle aromatique-aldéhyde.

7. Procédé de formation d'une résine liante diluable dans l'eau qui a une propriété montrant une viscosité < 100 mPa*s lorsqu'elle est mesurée à une concentration de 50 % en poids à 20 °C, dans lequel ledit procédé consiste à :
faire réagir au moins les composants suivants dans n'importe quel ordre : (a) une substance protéique qui est sensiblement soluble dans l'eau à 25 °C et a une viscosité < 50 mPa*s pour une solution aqueuse à 25 % en poids, (b) un composé hydroxyle aromatique et (c) un aldéhyde.

8. Procédé selon la revendication 7, dans lequel ledit composant (a) est un hydrolysat de protéine.

9. Procédé selon l'une quelconque des revendications 7 et 8, dans lequel le rapport en poids du composant (a) à la résine constituée de (b) et (c) en fonction de la teneur en matières solides est de 1 % à 50 %.

10. Procédé selon l'une quelconque des revendications 7 à 9, dans lequel au moins 50 % en poids du composant (a) ont un poids moléculaire moyen en poids (Mp) < 25 kDa par rapport au poids du composant (a).

11. Procédé selon l'une quelconque des revendications 7 à 10, dans lequel ledit composant (b) est le phénol et/ou le résorcinol et le composant (c) est le formaldéhyde.

12. Procédé selon l'une quelconque des revendications 7 à 11, comprenant en outre une résine aminée qui est au moins un élément choisi dans le groupe constitué par une résine d'urée-aldéhyde, une résine d'anilinealdéhyde, une résine de mélamine-aldéhyde et une résine de cocondensation de mélamine-urée-aldéhyde.

13. Procédé selon l'une quelconque des revendications 7 à 12, dans lequel le composé hydroxyle aromatique (b) et un aldéhyde (c) réagissent ensemble dans une première étape et ensuite la substance protéique (a) et facultativement le composé azoté est/sont mis(e) à réagir dans une seconde étape.

14. Matériau de fibres inorganiques comprenant une résine liante diluable dans l'eau préparée par un procédé consistant à :
mettre en contact les fibres inorganiques avec la résine liante diluable dans l'eau selon l'une quelconque des revendications 1 à 6, et
durcir la résine liante diluable dans l'eau.

15. Composition aqueuse durcissable pour la préparation d'une résine liante diluable dans l'eau qui a une viscosité < 100 mPa*s lorsqu'elle est mesurée à une concentration de 50 % en poids à 20 °C utile pour des fibres inorganiques de liaison, dans laquelle ladite composition aqueuse durcissable comprend :
(a) une substance protéique qui est sensiblement soluble dans l'eau à 20 °C et a une viscosité < 50 mPa*s pour une solution aqueuse à 25 % en poids, (b) un composé hydroxyle aromatique et (c) un aldéhyde.

16. Matériau de fibres inorganiques comprenant :
des fibres inorganiques au moins partiellement revêtues d'un liant durci comprenant une résine de composé hydroxyle aromatique-aldéhyde liée chimiquement de manière directe ou indirecte à une substance protéique, dans lequel ladite substance protéique a une propriété qui est sensiblement soluble dans l'eau à 20 °C et a une viscosité < 50 mPa*s pour une solution aqueuse à 25 % en poids lorsqu'elle est sous une forme isolée.
